# EUROPEAN PATENT SPECIFICATION

(11) **EP 1 236 192 B1**
(45) Date of publication and mention of the grant of the patent: **02.03.2005**
(21) Application number: 00972533.4
(22) Date of filing: 14.11.2000
(51) Int. Cl.: G09F 3/00, G09F 3/02

(54) **METHOD AND DEVICES FOR THE IDENTIFICATION OF PACKAGED OBJECTS**
VERFAHREN UND VORRICHTUNG ZUR IDENTIFIZIERUNG VERPACKTER GEGENSTÄNDE
PROCEDE ET DISPOSITIFS D'IDENTIFICATION D'OBJETS EMBALLES

(30) Priority: 06.12.1999 CH 223499
(43) Date of publication of application: 04.09.2002
(73) Proprietor: Boegli-Gravures S.A., 2074 Marin-Epagnier (CH)
(72) Inventor: BOEGLI, Charles, CH-2074 Marin-Epagnier (CH)
(74) Representative: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE
(86) International application number: PCT/CH2000/000608
(87) International publication number: WO 2001/043111

(56) References cited:
- DE-A- 4 226 654
- US-A- 4 766 911
- US-A- 5 241 299
- US-A- 5 267 756
- US-A- 5 762 377

## Description

The present invention refers to a method for the identification of objects wrapped in a packaging foil and/or package according to the preamble of claim 1, more particularly to the authentication of cigarette packages, respective of cigarettes.

Such a method is known from US-A-5 762 377, which discloses a method and device for ascertaining the authenticity of packages, whereby it is distinguished between a security element, e.g. a band or a magnet strip, which ensures the intactness of the goods, and an authenticating means, e.g. a hologram. The main idea of this patent is to unite the two elements, e.g. the security element and the authenticating means on the same label which is applied to the object.

For various reasons and due to the inexpensive possibilities of transporting goods over long distances, it has become increasingly interesting to imitate known products and to sell them under the corresponding known trademarks. This is particularly true for cigarettes, where it is increasingly attractive to sell falsifications due to high taxes and since the market is very large. The technical possibilities of the state of the art allow deceptive imitations of trademarks and other imprints and even of security elements such as tear-off strips on packages, more particularly on cigarette packages, so that the end user is unable to discern whether the cigarette package is genuine or false. Of course, this is also true for other goods.

Different attempts to ensure the authenticity of cigarette packages are known. Thus, it is known from CN-A-108 67 84 to provide cigarette packages with holographic strips, or from CN-A-107 82 78, to wrap the cigarette packages in cellophane paper of changing colors. However, with the necessary efforts, similar holograms or cellophane papers can be produced which are not distinguishable from the genuine ones by the customer or, in the case of contraband, by the retailer.

From US-A-5 764 874 it is known to use relatively complex image processing techniques for a quick detection of certain properties of passing cigarettes, e.g. the correct gluing of the cigarette paper, while US-A-5 365 596 discloses a method and devices for the automatic optical control of cigarette packages. However, the methods disclosed in the cited references are unsuitable for the authentication of cigarettes respective cigarette packages by retailers or by the end user. This is also true for US-A-5 190 428, which describes a general coding of elongated objects but is directed to detecting whether the cigarettes comprise filters.

Ultimately, from US-A-5 007 271, US-A-5 598 774 and EP-A-925 911 of the same applicant, methods and devices are known which allow a precise and clean glazing of packaging foils. Embossings or glazing of this kind are quite difficult to imitate and offer a certain protection from imitations. However, since the cigarettes with the packaging foil are contained in a box, it is only possible to ascertain whether the cigarettes respective the packaging foil is genuine when the box is open, i.e. after its purchase. Moreover, in this case, the end user has to know what the genuine embossed packaging foil, which guarantees the genuine content, should look like.

On the background of this prior art, it is an object of the present invention to provide a method which, on the one hand allows the use of known and hitherto used security elements and to apply at least one authenticating mark anywhere on the good or package and on the other hand to provide a method which allows the production of highly counterfeitproof authenticating marks by mechanical means. This object is attained by the method according to claim 1.

The invention will be explained in more detail hereinafter with reference to exemplary embodiments. The examples relate to the authentication of cigarette packages, respective of cigarettes, but it is apparent that the described methods and devices can also be used for other objects, e.g. from the pharmaceutical industry, such as capsules or pills, as well as for objects like PC cards or other objects of any kind.

Generally, between the manufacture of the objects concerned here and the ultimate consumer, four different commercial levels are involved:
1st level: the manufacturer, who applies the codes for subsequent verification;
2nd level: the distributor, who has a first possibility of authenticating the goods;
3rd level: the retailers, who have another possibility of authenticating the goods; and
4th level: the end user, who has to be able to determine the authenticity of the goods as well.

According to the invention, at the first level, different codes or authenticating means are applied. In the manufacture of tobacco products, the individual cigarettes, wrapped in a packaging foil or not, are inserted in cigarette packages which mostly consist of cardboard, and the packages are inserted in boxes and the latter packaged in containers which are the smallest unit shipped to the distributor. According to the invention, authenticating means or codes may be applied at all levels, i.e. to cigarettes, wrappers, packages, boxes, and containers, randomly combined with each other, and read and analyzed visually or by a machine.

Generally, groups of cigarettes are wrapped in foils and inserted in a cigarette package in this form. One side of these foils may be coated with metal, more particularly with aluminum, their support consisting of paper or another fibrous material, or they may be made of synthetic materials, of metal, or of compound materials.

In addition to the previously known embossing techniques as mentioned in the introduction, the packaging foil may be provided with a security embossing, e.g. one which produces a variable shadow effect depending on the viewing angle. A shadow embossing of this kind can be produced by means of the mentioned devices of the applicant, the individual embossing rolls being arranged and/or synchronized in such a manner as to produce a shadow effect embossing, whereby the teeth of the individual embossing rolls are formed such as to produce the shadow effects on the package material.

Furthermore, with special embossing methods, it is possible on the mentioned embossing machines to produce hologram effects or to provide the embossed patterns with microstructures which produce an interference and can be identified by suitable detectors. It is also possible to produce a second embossing or a plurality of relief embossings on the glazed paper, or to provide a partly or entirely colored embossing. For the verification of the authenticity of the package, respective of the packaging foil, the packaging foil comprises at least two of the mentioned marks.

Furthermore, in addition to the known identification marks such as trademarks and/or other imprints, the identification by means of an embossing includes the mentioned relief embossing on the package or box, i.e. externally, combined with a shadow embossing which is also provided externally, and/or combined with one of the embossings on the packaging foil. Moreover, the special embossing on the box or on the packaging foil can serve as a bar code or another code which is readable by the eye or machine-readable. However, the special embossing code should not be confoundable with the conventional bar code. The special embossing code can be applied in such a manner that it is only recognized by a suitable automatic reading method. Also, visible or invisible codes may be provided individually or on different portions of the glazed foil.

Furthermore, the cigarette package can be provided with windows which allow to read the authenticating marks on the packaging foil through the package. With special techniques using radiation of a suitable wavelength, it is even possible to read the code through the package without the need of providing it with special windows. Such codes may also be provided in the box itself, e.g. on the underside thereof.

Some or possibly all of the authenticating marks may be periodically or sporadically changed, and the currently valid code(s) may be communicated to the retailers and possibly also to the end users, e.g. by a notice at the sales points. Of course, other coding means can be provided which are known per se, e.g. directly on the cigarette, on the tip covering, on the cigarette paper, or on the filter, where olfactory, color or acoustic marks can be used, as well as hologram techniques or other surface effects such as special inks.

While a great number of authenticating marks can be visually verified by the vendor or the end user, other ones of the described marks can be controlled by machines which per se are known from the prior art. The reading of optical marks such as embossings and special embossings is possible with machines built according to the prior art and adapted to the purpose. According to the invention, in order to attain an increased security against falsifications, at least two of the described marks are provided on a cigarette package as it is purchased by the end user. In this manner, the end user can determine its authenticity in two different ways. Either the falsifications have no codes respective codes of lesser quality, or the currently valid code, possibly along with another code, is posted at the tobacco shop and/or published somewhere, e.g. on the internet or in newspapers.

Furthermore, the authentication marks are preferably realized in such a manner that they take account of the general appearance and the esthetic of the packages, thereby serving not only for security, but also for sales promotion.

Further possibilities for the identification of cigarettes result from the application of electronic means. Thus, recently, so-called transponders have been introduced, which serve e.g. for the identification of motor vehicles, of pieces of laundry, or of other objects. The transponder according to European Patent No. 762 535, which describes a thin and flexible antenna for a small transponder, shall be cited as an example. Other small transponders are known from the prior art. Thus, for example, each container may be provided with a transponder which is continuously reprogrammed with a new code according to the time of production or the location, etc., and placed in the container at some point.

According to a method of the invention, the signals of the transponders and their evaluation are multiply encoded by encrypting both the information of the transponder and the readout algorithm in the reader. The encryption of the transponder information is limited by the storage capacity of the transponder. The encryption is preferably performed with the latest known methods, e.g. with continuously changing authenticating marks which are only known to their owner.

Furthermore, so-called hardware locks, dongles or dongle keys, as well as so-called software locks or softkeys may be used, which are more difficult to break. The maximum security is ensured if two different keys are used, e.g. including a remotely reprogrammable key. The keys can be used purely locally with the reader respective PC and/or in combination with keys which are e.g. only available on the server of the device.

The readout requires a modem connection to the manufacturer, and the code is only deciphered when the decoder, which must be recognized by the manufacturer as well, is booted by the employee in charge. The code is only deciphered when the decoding algorithm is established in a random access memory. The latter may subsequently be deleted or is cleared e.g. when the device is turned off. Other cryptographic methods requiring an additional identification of the user are also possible.

Basically, this procedure may be performed at all levels, i.e. at the level of the cigarette, of the packaging foil, of the cigarette package, and/or of the cigarette container, and the control station may be operated by the distributor and/or the retailer. This represents an additional control possibility, and the electronic control by means of transponders may be combined with the other previously described optical or other methods.

Readers for the identification of signals transmitted by transponders are known per se from the prior art.

The preceding description shows that combined authenticity marks and control instances can be used at all levels and in all stages and combined with each other or with other marks and control instances. Thus, the authenticity can be ascertained at all commercial levels in an automated manner. This can be effected without the need of opening the packages or of analyzing the goods, and independently of the type of package. At the upper level, i.e. at the level of the distributor respective wholesaler, at least two verifications can be effected, which is also possible at the retail level. At the level of the end user, the verification can be effected optically by at least two marks, and the authenticity can be ascertained through the publication of the corresponding code at the store or in other media.

## Claims

1. Method for the identification of an object packaged in a wrapper of packaging foil and/or in a package, by means of at least one authenticating mark including visual and/or electronic identification means, whereby the authenticating mark is applied in addition to security elements for the purpose of ascertaining the intactness and for the surveillance of the goods, **characterised in that** said at least one of the authenticating marks is embossed directly on the packaging foil or on the package by an embossing device comprising embossing rolls being arranged and/or synchronized as to produce a special embossing producing a shadow effect and whose brightness varies according to the viewing angle.

2. Method according to claim 1, **characterized in that** the objects to be identified are cigarettes which are disposed without a wrapper of packaging foil in a package, at least two authenticating marks being provided or incorporated on the cigarette package and/or on each individual cigarette, and the marks being identified visually or by machines.

3. Method according to claim 1, **characterized in that** the objects to be identified are cigarettes which are wrapped in a foil and disposed in a package, the foil and the package comprising at least one embossing each, or the foil or the package comprising at least two different embossings which are identified visually or by a machine.

4. Method according to claim 1, **characterized in that** at least one of the authenticating marks is a special embossing which is invisible to the naked eye and recognizable by corresponding optical apparatus.

5. Method according to claim 3, **characterized in that** at least one authenticating mark on the packaging foil is machine-detectable through the cigarette package.

6. Method according to claim 5, **characterized in that** the cigarette package comprises corresponding windows.

7. Method according to claim 2 or 3, **characterized in that** each individual cigarette comprises at least one authenticating mark which is provided or incorporated on the cigarette paper, and/or on the tip covering, and/or on the filter.

8. Method according to claim 2 or 3, **characterized in that** it comprises further an optical reader which is apt to identify and display embossed authenticating marks, in particular embossing producing a shadow effect.

9. Method according to claim 8, **characterized in that** the package and/or the reader comprises means allowing to identify and display embossed authenticating marks through a package.

## Patentansprüche

1. Verfahren zur Erkennung eines in einer Umhüllung aus Verpackungsfolie und/oder in einer Packung verpackten Gegenstands anhand mindestens eines Sicherheitsmerkmals mit visuellen und/oder elektronischen Erkennungsmitteln, wobei das Sicherheitsmerkmal zusätzlich zu Sicherheitselementen angebracht wird, um die Unversehrtheit der Waren festzustellen und diese zu überwachen, **dadurch gekennzeichnet, dass** das mindestens eine Sicherheitsmerkmal direkt auf die Verpackungsfolie oder auf die Packung geprägt wird mittels einer Prägevorrichtung, deren Prägewalzen derart angeordnet und/oder synchronisiert sind, dass eine Spezialprägung erzeugt wird, die einen Schatteneffekt bewirkt und deren Helligkeit sich je nach dem Betrachtungswinkel ändert.

2. Verfahren nach Anspruch 1, **dadurch gekennzeichnet, dass** die zu erkennenden Gegenstände Zigaretten sind, die ohne umhüllende Verpackungsfolie in einer Packung angeordnet sind, wobei mindestens zwei Sicherheitsmerkmale auf der Zigarettenpackung und/oder auf der einzelnen Zigarette angeordnet oder eingearbeitet sind und diese visuell oder mittels Maschinen erkannt werden.

3. Verfahren nach Anspruch 1, **dadurch gekennzeichnet, dass** die zu erkennenden Gegenstände Zigaretten sind, die von einer Folie umhüllt und in einer Packung angeordnet sind, wobei die Folie und die Packung mindestens je eine Prägung oder die Folie oder die Packung mindestens zwei verschiedene Prägungen aufweist, die visuell oder maschinell erkannt werden.

4. Verfahren nach Anspruch 1, **dadurch gekennzeichnet, dass** mindestens eines der Sicherheitsmerkmale eine Spezialprägung ist, die von blossem Auge nicht sichtbar und von entsprechenden optischen Geräten erkennbar ist.

5. Verfahren nach Anspruch 3, **dadurch gekennzeichnet, dass** mindestens ein Sicherheitsmerkmal auf der Verpackungsfolie maschinell durch die Zigarettenpackung erkennbar ist.

6. Verfahren nach Anspruch 5, **dadurch gekennzeichnet, dass** die Zigarettenpackung entsprechende Fenster aufweist.

7. Verfahren nach Anspruch 2 oder 3, **dadurch gekennzeichnet, dass** die einzelnen Zigaretten mindestens ein Sicherheitsmerkmal aufweisen, das am Zigarettenpapier und/oder am Mundstückbelag und/oder am Filter angebracht oder eingearbeitet ist.

8. Verfahren nach Anspruch 2 oder 3, **dadurch gekennzeichnet, dass** sie weiter einen optischen Leser enthält, der geeignet ist, geprägte Sicherheitsmerkmale zu erkennen und anzuzeigen, insbesondere eine Prägung mit Schatteneffekt.

9. Verfahren nach Anspruch 8, **dadurch gekennzeichnet, dass** die Packung und/oder der Leser Mittel aufweisen, um geprägte Sicherheitsmerkmale durch eine Packung zu erkennen und anzuzeigen.

## Revendications

1. Procédé d'identification d'un objet emballé dans une enveloppe en feuille d'emballage et/ou dans un paquet, au moyen d'au moins une marque d'authenticité comprenant des moyens d'identification visuels et/ou électroniques, ladite marque d'authenticité étant appliquée en plus d'éléments de sécurité afin de vérifier l'état intact des marchandises et de les surveiller, **caractérisé en ce que** ladite au moins une marque d'authenticité est gaufrée directement sur la feuille d'emballage ou sur le paquet par un dispositif de gaufrage comprenant des rouleaux de gaufrage agencés et/ou synchronisés de manière à produire un gaufrage spécial qui produit un effet d'ombre et dont la luminosité varie selon l'angle d'observation.

2. Procédé selon la revendication 1, **caractérisé en ce que** les objets à identifier sont des cigarettes disposées sans enveloppe en feuille d'emballage dans un paquet, au moins deux marques d'authenticité étant pourvues sur ou incorporées dans le paquet de cigarettes et/ou les cigarettes individuelles, et les marques étant identifiées visuellement ou par machine.

3. Procédé selon la revendication 1, **caractérisé en ce que** les objets à identifier sont des cigarettes enveloppées dans une feuille et disposées dans un paquet, la feuille et le paquet comprenant chaque fois au moins un gaufrage, ou la feuille ou le paquet comprenant au moins deux gaufrages différents qui sont identifiés visuellement ou par machine.

4. Procédé selon la revendication 1, **caractérisé en ce que** l'une des marques d'authenticité au moins est un gaufrage spécial qui est invisible à l'oeil nu et reconnaissable par des appareils optiques correspondants.

5. Procédé selon la revendication 3, **caractérisé en ce qu'**au moins une marque d'authenticité sur la feuille d'emballage est détectable par machine à travers le paquet de cigarettes.

6. Procédé selon la revendication 5, **caractérisé en ce que** le paquet de cigarettes comporte des fenêtres correspondantes.

7. Procédé selon la revendication 2 ou 3, **caractérisé en ce que** chaque cigarette individuelle comporte au moins une marque d'authenticité qui est pourvue sur ou incorporée dans le papier à cigarette et/ou le revêtement de l'embout et/ou le filtre.

8. Procédé selon la revendication 2 ou 3, **caractérisé en ce qu'**il comprend en outre un lecteur optique capable d'identifier et d'afficher des marques d'authenticité gaufrées, plus particulièrement des gaufrages produisant un effet d'ombre.

9. Procédé selon la revendication 8, **caractérisé en ce que** le paquet et/ou le lecteur comprennent des moyens permettant d'identifier et d'afficher des marques d'authenticité gaufrées à travers le paquet.
